# EUROPEAN PATENT APPLICATION

(11) **EP 2 252 061 A1**
(43) Date of publication of application: **17.11.2010**
(21) Application number: 09305439.3
(22) Date of filing: 15.05.2009
(51) Int. Cl.: H04N 7/24, H04L 29/08

(54) **Method and system for storing and distributing electronic content**

(71) Applicant: Thomson Licensing, 92130 Issy-les-Moulineaux (FR); Groupe des Ecoles des Telecommunications/ Ecole Nationale Superieure de Telecommunications De Bretagne, 29238 Brest Cedex 3 (FR)
(72) Inventor: Chen, Yiping, 35000 Rennes (FR); Simon, Gwendal, 29280 Plouzane (FR); Straub, Gilles, 35690 Acigne (FR)
(74) Representative: Lindemann, Robert

(57) **Abstract**

A content distribution network has at least two network stations adapted for storing and retrieval of content. The content is divided in complementary fragments stored in different network stations. When a further network station is added to the network it determines which fragments of a desired content are available from other network stations within a predetermined maximum distance. In case not all fragments of the desired content are available within the predetermined distance the added network station downloads a random fragment from a set of missing fragments of the desired content from a network station that is further away than the predetermined distance. Otherwise the added network station determines a set of network stations located within the predetermined maximum distance having the closest distance to the added network station, while, in their totality, storing all fragments of the desired content required for producing the complete file. The added network station then downloads the fragment of the desired content from that network station out of the previously determined set of network stations that has the largest distance.

## Description

The invention relates to a method and a system for distributing, storing and retrieving of electronic content via a network. In particular, the invention relates to efficiently placing different parts of content that is divided into fragments.

For the sake of clarity and simplicity the following specification refers to video-on-demand (VoD) services. However, the invention may also apply to any general network used for serving files. In particular, the files do not necessarily have to be video files.

On-demand video delivery over a content delivery network (CDN) that is solely based on set-top-boxes distributed within the network has recently been introduced. In general, in a VoD service, a set of managed devices, also referred to as set-top boxes, is capable of storing video content. The set-top boxes are also capable of uploading this content to other set-top boxes. Each video is divided into a number of complementary fragments, also referred to as substreams. In order to reproduce the video the set-top box needs to download missing substreams until all substreams are available at that specific set-top box.

The fragments, or substreams, may be randomly stored in the set-top-boxes of the network. In order to retrieve a file, requests from clients are redirected to the nearest boxes which store fragments of the requested file. A client requesting a file may completely download all fragments of a file, or, e.g. in case of a video file that is to be streamed, may request streaming of each respective fragment in an ordered manner.

However, random distribution of fragments of the files may result in inefficient allocation of fragments to set-top-boxes, which in turn may result in increased cost for delivery of a requested file. For example, one fragment of a video file may be placed much further away from a requesting client than other fragments of the same video, while two set-top-boxes that are relatively close to the requesting client host identical fragments. In this example, the two neighbouring set-top boxes hosting identical fragments cannot download the missing fragment from each other, but have to download content from another set-top box, which is probably very far away. This scenario would produce some unnecessary network traffic between the requesting client and the set-top-box that is placed much further away, as compared with a scenario in which set-top-boxes neighbouring to a requesting client are capable of providing all required fragments of a file. Network traffic to relatively remote hosts may occupy scarce network resources, in particular when a number of hubs or routers needs to be crossed, or when the network traffic needs to be routed across different domains.

Unless otherwise noted, the expression "distance" is interchangeably used throughout the following specification in the sense of geographical distance, network distance, e.g. in router hops, available bandwidth, or transmission delay. The term distance may also refer to network cost, i.e. the cost to transport data from a network device hosting a fragment of a file to a network device that requested the file or the fragment of the file. Network cost can be computed by taking into account cost for crossing domains at the router level or by taking into account the number of traversed routers. The cost may also be related to the "network load", i.e. the cost increases when the number of network nodes in the data path between boxes increases. The network cost may also dynamically change depending on the time of day or the amount of data that is currently exchanged through a segment of the network.

One known algorithm for placing content within a content distribution network is known as k-PUFLP, or "k-Product Uncapacitated Facility Location Problem" algorithm. This algorithm is disclosed for example in A. Klose, A. Drexl, "Facility location models for distribution system design," European Journal of Operational Research, vol. 162, no. 1, pp. 4 - 29, 2005. The k-PUFLP algorithm is a "centralized" algorithm, i.e. a central entity knows about the location of all set-top boxes within the network. Any time a new set-top box is added to the network the distribution of files amongst the set-top boxes needs to be recalculated for all set-top boxes. Since placing and replacing of content in set-top boxes is also costly, this k-PUFLP algorithm is not well suited for efficient content placement in a content distribution network in which set-top boxes act as clients and as hosts.

It is desirable to provide a method and a system for optimized and distributed data placement, so that each box would participate in the overall placement process by taking the right decision without having to rely on a central control instance.

Assuming that the locations of all set-top boxes are known it is an object of the invention to provide a method for assigning a "good" substream to every set-top box in order to minimise the global cost of such content distribution service.

The inventive method for content placement takes into account on the network cost/distance among boxes. In particular, the distribution of substream to set the boxes takes into account the network distance/cost to its neighbouring boxes and what content is already stored by these neighbouring boxes. A result of the inventive method is minimising the local cost for each set-top box through selecting appropriate substreams for local storage.

In accordance with one or more embodiments of the invention it is assumed that each set-top box stores just one substream out of the total number of substreams, e.g. for taking into account limited storage capacity. However, the size of the substream may vary. Also, the substream does not have to consist of a sequence of contiguous elements or parts of the file.

The inventive method may be used for distributing electronic content over a network having at least two network stations. The network stations are adapted for storing and for retrieval of the stored content. The content is organised in files, wherein the files are divided in complementary fragments. The complementary fragments of a file are stored in different network stations. According to the method, when a further network station is added to the network, the added further network station determines which fragments of a given file are available from other network stations within a predetermined maximum distance. The expression "a given file" is used for indicating a unique and unambiguously identifiable file. Is it not meant to limit the invention to one particular file or one particular file type. In case not all fragments of the given file are available within the predetermined distance the added further network station downloads a random fragment from a set of missing fragments of the given file from a network station that is further away than the predetermined distance. In case all fragments of the given file are available within the predetermined distance the added further network station determines a set of network stations located within the predetermined maximum distance. The so-determined set of network stations contains those network stations which have the closest distance to the added further network station, while, in their totality storing all fragments of the given file required for producing the complete file. The added further network station then downloads the fragment of the given file from that network station out of the previously determined set of network stations that has the largest distance.

In one embodiment of the inventive method the added further network station determines whether and which fragments of files it has presently stored.

In another embodiment of the inventive method the added further network station initially contains no stored content at all.

It is to be noted, that the network station that is further away than the predetermined distance may be a content server hosting all fragments of a file, or one or more a network stations out of a further group of network stations

In yet another embodiment of the inventive method a content server determines, upon initialisation of the network, which fragments are to be stored by which network station. The initialisation process may also be considered a pre-push of content under the control of the content server. Once the initialisation of the network is terminated, further distribution of content may be depending upon individual requests from set-top boxes. The further distribution of content may also be considered as pre-fetch under the control of individual set-top boxes.

An electronic content distribution system according to the invention includes a network having at least two network stations. The network stations are adapted to perform the method described further above.

A network station of the electronic content distribution system according to the invention may include a network interface for sending and receiving commands and data. The network station may further include a microprocessor and program and data memory. The data memory may include volatile as well as non-volatile memory, in particular flash memory and magnetic or optical disk storage. The program memory of the network station may be programmed to perform the method steps described further above.

In one embodiment of the invention the network station is adapted for streaming of the fragments of a given file in a timely and ordered manner. Also, the network station according to the invention may be adapted for receiving fragments of a given file for a production. In a preferred embodiment the network station is adapted for buffering received fragments of a given file while represent parts already received.

The inventive method results in a placement of file fragments such that, for any arbitrarily chosen set-top box, the distance to other set-top boxes storing the fragments required for complementing a file is minimised. The selection of which fragment to store locally is based on the fragments already stored by neighbouring set-top boxes.

In one embodiment, the method considers a restricted awareness a newly added set-top box of neighbouring set-top boxes and their respective stored content. However, the newly added set-top box knows how many fragments are required for a given file. The newly added set-top box determines which fragments are available at its respective immediate neighbours, and downloads the missing fragment for local storage. The selected fragment may be downloaded from a central server, or from other set-top boxes located further away. In case each set-top box is storing only one fragment of a file, the number of neighbours considered for the decision is the number of fragments of the file reduced by 1.

The fragments may be substantially equal in size, in terms of bytes, or, in case of video or audio files, may be selected according to the duration of playback. However, set-top boxes having larger storage, or higher bandwidth, or lower overall cost for uploading, may take a larger fragment for storage. The decision depends on which parameter is to be optimized, e.g. network load distribution, or network traffic cost per set-top box, or per network segment, or the like.

In the following the invention will be described with reference to the drawings in which
- Figure 1: shows an exemplary system according to the invention;
- Figure 2: diagrammatically shows the distribution of file fragments to a newly added set-top box; and
- Figure 3: shows a block diagram of an exemplary set-top box according to the invention.

In the figures like or similar elements are referenced with the same reference numerals.

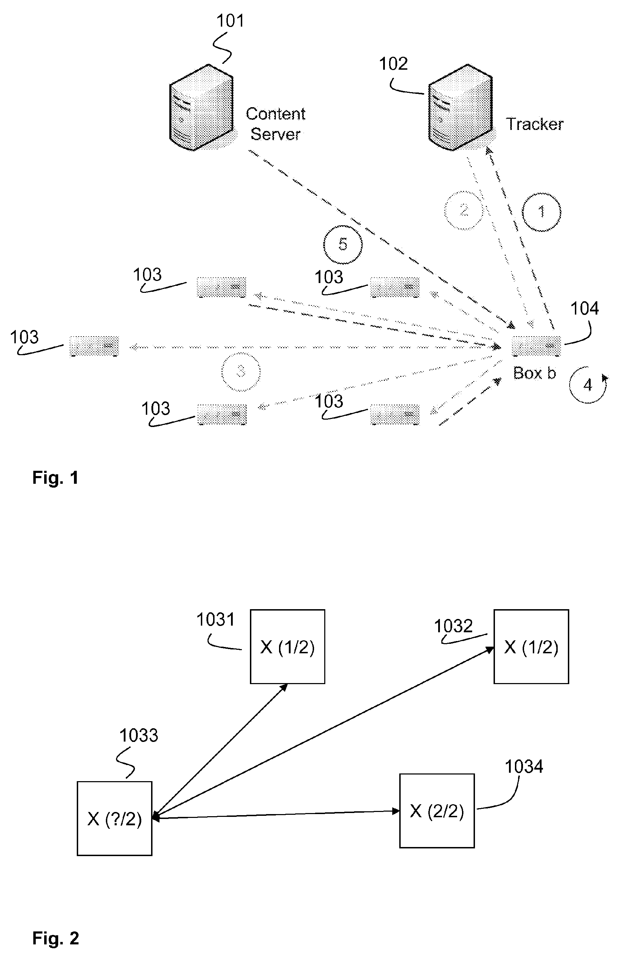

Figure 1 shows one example of a system in accordance with the invention. The system includes a content server 101, a tracker 102 and a number of set-top boxes 103, 104. Content server 101 is in charge of preparing, storing and sending content to set-top boxes 103, 104. Content server 101 may be a central server as well as a general content delivery network service. In the exemplary embodiment shown in this figure a BitTorrent-like peer discovery is assumed: tracker 102 is responsible for connecting all set-top boxes by sending lists of active set-top boxes to them. However, any other discovery protocol may be used. It is also assumed that set-top boxes 103, 104 do not store any substream initially. It is to be noted that set-top boxes 103, 104 may of course store a content before the initialisation, e.g. due to change of location of a set-top box within the network. The set-top boxes 103, 104 have to follow a defined protocol to decide which substream it should store, then download a substream so-determined.

When a new set-top box 104 joins in the network it sends a request to tracker 102. The new set-top box 104 joining the network is labelled "Box b" in the figure. As noted further above, in the exemplary embodiment the local storage of the newly added set-top box 104 is initially empty. The request to tracker 102 is indicated by the dashed arrow labelled "1". This request may also be sent when one of substreams stored in the set-top box becomes obsolete. In this case, the box also needs to request a new substream to replace the obsolete one.

Similar to the BitTorrent protocol, tracker 102 in the exemplary system is in charge of connecting all boxes. To this end it may maintain an index of all active set-top boxes. When it receives the request from newly added set-top box 104, tracker 102 sends back a list of active set-top boxes 103. Sending back the list of active set-top boxes 103 is indicated in the figure by the dashed arrow labelled "2". This results in building up an overlay network of set-top boxes 103, 104. It is to be noted that a tracker-less architecture can also be used, for example a distributed hash table (DHT) or pure distributed architecture.

Once the list of active set-top boxes 103 is received by newly added set-top box 104 (Box b), "Box b" measures its distance to all set-top boxes 103 in this list, and checks which substream the other set-top boxes 103 are actually storing. Setup box 104 then determines a 3-tuple data set consisting of a unique identifier of each set-top box 103 (boxID), a value for the distance and/or cost, and the substreams hosted for every set-top box 103 in the list. As mentioned further above, the definition of network distance or cost depends on the goal of optimization. For example, if network traffic is to be reduced, the number of router-level or AS-level hops may indicate the network distance. AS is an abbreviation for "Autonomous System", i.e. a system that is otherwise self-contained but allows for access to other autonomous systems. Newly added set-top box 104 determines which substream to stored locally based on the knowledge of both distance and content availability of neighbouring set-top boxes 103.

It is to be noted that the determination of the 3-tuple data set by the set-top box 104 itself may as well be replaced by a third party service external to the set-top box 104. For example, it is conceivable that tracker 102 integrates this service and directly provides the measurement results, e.g. as part of the list of active set-top boxes 103 sent upon the request issued by the newly added set-top box 104. A distributed distance estimation protocol as Vivaldi or Meridian could also be used.

Preferably the distance measurement takes into account the routing policies used during actual data download. For example, two set-top boxes 103 may be located in two directly connected ASes (Autonomous Systems), but unfortunately, the link between these two ASes is very costly. When AS1 downloads content from AS2, another route by a third AS (e.g. AS1 - AS3 - AS2) is actually used for data packets instead of the direct link. In this case, the route from AS1 to AS2 via AS3 should be used for distance calculation.

The newly added set-top box 104 decides which substream it should download, based on measurement results obtained in the previous step.

In order to limit the complexity of the calculations and reduce the network traffic caused by measurement itself, it may be useful to set a threshold δ. All set-top boxes 103 located at a distance greater than δ will not be measured and not be considered for making the decision.

Among all considered set-top boxes 103 variable C denotes the set of substreams already stored by the totality of these set-top boxes 103. Variable k denotes the number of substreams of a complete data file or video file. Once C is calculated, there are two possible scenarios:

|C| < k: this means that C is not containing all necessary substreams. In this case, newly added set-top box 104 downloads a random substream among all missing substreams of C from any source not part of the considered set-top boxes 103.

|C| = k: All substreams of a video or data file can be found in the neighbourhood of set-top box 104. In this case set-top box 104 will download and store the "furthest" substream. The "furthest" substream is defined as the one that will generate most cost if the set-top box 104 wants to retrieve a replica thereof using a defined routing protocol. It is to be noted that the "furthest" substream may be different from the substream stored by the furthest box.

Figure 2 shows an exemplary network to which a new set-top box is added and will be used in the following for elucidating the process of determining, which fragment is to be downloaded and stored.

In the example shown the total number of fragments of a file X is assumed k=2, i.e. file X is divided into 2 substreams or fragments 1/2, 2/2. The system includes set-top boxes 1031 and 1032, both storing fragment 1/2 of file X. Set-top box 1034 stores fragment 2/2 of file X. A new set-top box 1033 is added and discovers its three neighbours, set-top boxes 1031, 1032 and 1034. As mentioned before, each of them already hosts one substream. The new set-top box 1033 measures the distance to its neighbours and also checks which substreams they store. Then, new set-top box 1033 runs the inventive method for deciding which substream to store locally. In accordance with the invention it will choose the furthest substream which, in the example, is substream 2/2, rather than 1/2. This is, because set-top box 1031 already stores substream 1/2 and is located close to the set-top box 1033, while set-top box 1034 storing substream 2/2 is relatively farther away than set-top box 1031. Storing another copy of substream 1/2 would not reduce the overall distance of all required substreams, even though set-top box 1032 is located even farther away than set-top box 1034.

Set-top box 1033 may then download in parallel the selected substream from the content server and other active boxes storing this substream. Once the download is finished, the request sent by the newly added set-top box 1033 is accomplished.

The step described in the foregoing represent how one set-top box chooses one substream of a given file. Substreams of different files can be stored in the same set-top box. In accordance with one aspect of the invention, an independent service may determine the set of files to be stored in each set-top box. This service may also take into account the popularity of the file, user preference, and the like. Once the set of files is determined, the respective fragments are placed in the set-top box in accordance with the method described in this specification.

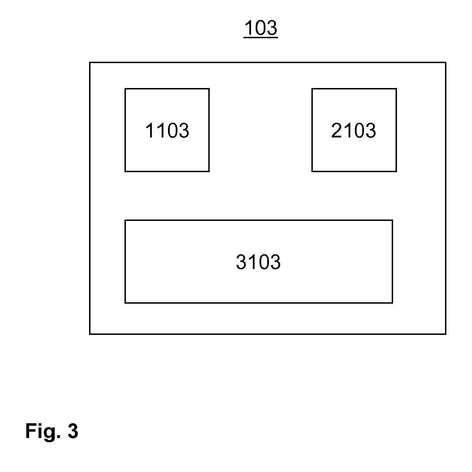

Figure 3 shows a block diagram of a set-top box 103 in accordance with the invention. The set-top box includes a network interface 1103 for sending and receiving data and commands or requests. Further, a microprocessor 2103 is provided, that is adapted to perform the inventive method. The microprocessor may be accompanied by a memory 3103 for executing a program. The memory may include flash memory, SRAM, SDRAM or optical or magnetical storage, or a combination thereof.

The invention described in the foregoing provides an improved way of content allocation/placement for a content distribution network (CDN) that is so-called "box-powered", i.e. using distributed set-top boxes of users for storage and distribution. This invention advantageously improves the efficiency of the distribution and the traffic associated. Also, the invention advantageously allows for distributed management of the content distribution. Yet further, the inventive method is highly adaptive. Service providers may define different own distance / cost parameters and achieve a fully customized optimization.

## Claims

1. Method for distributing electronic content over a network having at least two network stations, the network stations being adapted for storing and for retrieval of the stored content, wherein the content is organised in files, wherein the files are divided in complementary fragments, wherein the complementary fragments of a file are stored in different network stations, the method including the steps of:
- adding a further network station to the network;
- the added further network station determining which fragments of a given file are available from network stations within a predetermined maximum distance;
wherein, in case not all fragments of the given file are available within the predetermined distance, the method further includes the step of:
- the added further network station downloading a random fragment from a set of missing fragments of the given file from a network station that is further away than the predetermined distance;
wherein, in case all fragments of the given file are available within the predetermined distance, the method further includes the steps of:
- the added further network station determining a set of network stations located within the predetermined maximum distance, the set containing those network stations which have the closest distance to the added further network station, wherein the totality of the set of network stations stores all fragments of the given file required for producing the complete file;
- the added further network station downloading the fragment of the given file from that network station out of the set of network stations that has the largest distance.

2. The method of claim 1, wherein each network station only stores a fragment of a given file, the fragment having a predetermined maximum size, wherein fragments may comprise contiguous or non-contiguous parts of the total file.

3. The method of claim 1, wherein the added further network station determines whether and which fragments of files it has presently stored.

4. The method of claim 1, wherein the added further network station initially contains no stored content.

5. The method of claim 1, wherein the network station that is further away than the predetermined distance is a content server hosting all fragments of a file, or one or more network stations out of a further group of network stations.

6. The method of claim 1, wherein, upon initialisation of the network, a content server determines which fragments are to be stored by which network stations.

7. The Method of claim 1, wherein the calculation of the distance is based upon network cost, router hops, transmission latency, transmission delay, or a combination thereof.

8. Electronic content distribution system including a network having at least two network stations, wherein the network stations are adapted to perform the method according to any one of claims 1 to 7.

9. Network station of an electronic content distribution system, the network station including a network interface for sending and receiving commands and data, a microprocessor and program and data memory, **characterised in that** the network station is adapted to perform the method according to any one of claims 1 to 7.

10. The network station of claim 9, wherein the network station is adapted for streaming of the fragments of a given file in a timely and ordered manner, and/or for receiving and buffering received fragments of a given file while reproducing parts of the given file already available at the network station.
